Europäisches Patentamt

European Patent Office

Office européen des brevets

(19)

(11) Numéro de publication: **0 026 696**
**B1**

(12) **FASCICULE DE BREVET EUROPEEN**

(45) Date de publication du fascicule du brevet:
**11.01.84**

(51) Int. Cl.³: **B 23 K 11/32**

(21) Numéro de dépôt: **80401324.1**

(22) Date de dépôt: **17.09.80**

(54) **Dispositif de soudage électrique d'une plaquette sur la paroi interne d'un tube.**

(30) Priorité: **28.09.79 FR 7924220**

(43) Date de publication de la demande:
**08.04.81 Bulletin 81/14**

(45) Mention de la délivrance du brevet:
**11.01.84 Bulletin 84/2**

(84) Etats contractants désignés:
**BE CH DE FR GB IT LI SE**

(56) Documents cités:
**EP - A - 0 012 550**
**US - A - 2 015 173**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Couyras, André, 3, rue Charcot, F-94000 Creteil (FR)**
Inventeur: **Hareux, Fernand, 9, Avenue de Verdun, F-92260 Fontenay aux Roses (FR)**
Inventeur: **Jarrige, André, 51, Boulevard du Montparnasse, F-75006 Paris (FR)**

(74) Mandataire: **Mongrédien, André et al, c/o BREVATOME 25, rue de Ponthieu, F-75008 Paris (FR)**

BUNDESDRUCKEREI BERLIN

# Dispositif de soudage électrique d'une plaquette sur la paroi interne d'un tube

La présente invention a pour objet un dispositif pour le soudage électrique d'une plaquette métallique sur la paroi interne d'un tube de faible diamètre.

De façon plus précise, la présente invention concerne un dispositif qui permet de souder, par points, sur la paroi interne d'un tube de faible diamètre, par exemple ayant un diamètre de 20 mm, et ayant une longueur importante, des plaquettes métalliques.

Une application du présent dispositif donnée à titre explicatif et nullement limitatif est le soudage sur la paroi interne d'un tube en U de générateur de vapeur, par exemple de jauges de déformation pour l'expérimentation de ces tubes. On sait en effet qu'il est nécessaire de tester en particulier le comportement vibratoire des tubes en U des générateurs de vapeur lorsque ces tubes en U ont été montés sur la plaque à tubes inférieure du générateur de vapeur. Or, ces tubes ont une longueur importante, un diamètre réduit, par exemple de 19 mm, et ils ne sont accessibles que par leur extrémité inférieure au niveau de la plaque à tubes. En outre, ces tubes comportent une partie coudée formant la partie supérieure du U.

En outre, on sait que pour que les indications données par les jauges de déformation soient valables, il est nécessaire d'avoir une très bonne fixation de la plaquette support de la jauge sur la pièce mécanique que l'on veut tester.

L'invention peut également être utilisée pour la mise en place d'appareils de mesure tels que des accéléromètres à l'intérieur des tubes des générateurs de vapeur.

En conséquence, un premier objet de l'invention est de fournir un dispositif de soudage électrique d'une plaquette métallique sur la paroi d'un tube, ce dispositif pouvant être introduit dans un tube de grande longueur et de diamètre réduit.

Un autre objet de l'invention est de fournir un dispositif de ce type qui permet de plus d'effectuer ce soudage électrique dans des portions de tube coudées, ces portions étant éloignées de l'extrémité d'entrée du tube.

On connaît déjà un dispositif de soudage correspondant au préambule de la revendication 1 (demande de brevet européen EP-A-12 550). Dans ce dispositif, les moyens de commande sont complètement mécaniques. Ce document est assimilé à l'état de la technique au titre de l'article 54, paragraphe 3, de la Convention sur le brevet européen.

L'invention se distingue de cet art antérieur par le fait que les moyens à commande sont constitués par des moyens à commande par fluide logés dans ledit corps et par le fait que le dispositif de soudage comporte des moyens d'alimentation en fluide sous pression.

Un autre objet de l'invention est de fournir un dispositif de ce genre permettant d'obtenir un très bon soudage de la plaquette sur la paroi du tube et pour cela de contrôler de façon très précise la position des points de soudure de la plaquette sur la paroi du tube.

Un autre objet de l'invention est de réaliser un dispositif de ce type qui peut être entièrement introduit dans la demi-boîte à eau d'un générateur de vapeur dont on veut tester les tubes, le dispositif devant pouvoir entrer par le trou d'homme ménagé dans la paroi de ladite boîte à eau.

Pour obtenir ces résultats, le dispositif selon l'invention, de soudage électrique d'une plaquette métallique sur la paroi interne d'un tube de faible diamètre se caractérise en ce qu'il comprend:
— une tête de soudage dont le diamètre extérieur est inférieur au diamètre intérieur dubit tube, ladite tête de soudage comprenant un corps, au moins une électrode apte à être déplacée par rapport audit corps selon une direction sensiblement perpendiculaire à l'axe dudit corps pour exercer une pression sur ladite plaquette placée sur la paroi dudit tube, et des moyens à commande par fluide pour déplacer l'électrode selon ladite direction,
— des moyens de raccordement de longueur variable portant la tête de soudage de façon à assurer son guidage et son déplacement à l'intérieur du tube, lesdits moyens de raccordement comprenant au moins une conduite d'alimentation des moyens pour déplacer l'électrode et au moins un conducteur électrique pour l'alimentation de ladite électrode,
— des moyens aptes à être solidarisés à l'extrémité ouverte dudit tube pour assurer un déplacement micrométrique des dits moyens de raccordement et de la tête de soudage qu'il portent dans ledit tube,
— des moyens pour alimenter en fluide sous pression ladite conduite d'alimentation, et
— des moyens d'alimentation électrique pour ledit conducteur électrique.

Selon un premier mode de réalisation de l'invention, les moyens à commande par fluide comprennent au moins un vérin pneumatique.

Selon une première variante, le vérin pneumatique comprend alors un piston dont le déplacement est parallèle à l'axe du corps et une tige solidaire du piston et reliée par une bielle à un bras articulé par rapport au corps autour d'un axe de direction orthogonale à l'axe du corps, ledit bras portant une plaque présentant sur sa face externe par rapport au corps au moins une pointe formant ladite électrode.

Selon une deuxième variante, le vérin pneumatique comprend un piston dont le déplacement est parallèle à l'axe du corps et une tige solidaire du piston et portant un mandrin qui coopère avec au moins une pièce formant came solidaire d'un bras déformable solidaire du corps à l'une de ses extrémités et portant à son extrémité opposée et sur sa face externe par rapport au corps au moins une pointe formant ladite électrode.

Selon une troisième variante, le vérin pneumatique comprend un piston dont le déplacement est orthogonal à l'axe du corps et une tige solidaire du piston et dont l'extrémité libre coopère avec une pièce articulée par rapport au corps à l'une de ses extrémités autour d'un axe de direction orthogonale à celui du corps, l'extrémité opposée de ladite pièce portant sur sa face externe par rapport au corps au moins une pointe formant ladite électrode.

Conformément à un deuxième mode de réalisation de l'invention, les moyens à commande par fluide comprennent au moins un manchon déformable logé dans une enveloppe rigide présentant une fenêtre autorisant la déformation du manchon hors de l'enveloppe dans une direction donnée.

De préférence, la tête de soudage comprend alors au moins un premier manchon déformable logé dans une première enveloppe rigide définissant une partie d'un bras articulé par rapport au corps à l'une de ses extrémités autour d'un axe orthogonal à celui du corps, l'extrémité opposée dudit bras portant sur sa face externe par rapport au corps au moins une pointe formant ladite électrode, la fenêtre formée dans la première enveloppe étant disposée en regard d'une première surface d'appui formée sur ledit corps, et au moins un deuxième manchon déformable logé dans une deuxième enveloppe rigide articulée par rapport au corps à l'une de ses extrémités autour d'un axe parallèle à l'axe d'articulation dudit bras, la fenêtre formée dans la deuxième enveloppe étant disposée en regard d'une deuxième surface d'appui formée sur ledit corps et l'extrémité opposée de la deuxième enveloppe étant susceptible de coopérer avec le bras par sa face opposée à la fenêtre correspondante pour maintenir la pointe formant électrode éloignée dudit tube.

Selon une autre caractéristique de l'invention, les moyens de raccordement peuvent comprendre des barres de raccordement aptes à être introduites bout à bout dans le tube, chaque barre comprenant une section de ladite conduite d'alimentation et une section dudit conducteur électrique, chaque barre comprenant à ses extrémités des moyens de connexion étanche des sections de la conduite d'alimentation et des moyens de liaison électrique entre les sections de conducteur électrique.

Les moyens de raccordement peuvent aussi comprendre au moins un ruban souple apte à être introduit dans le tube sur une longueur donnée, et des moyens de centrage régulièrement répartis le long dudit ruban et assurant simultanément le centrage de la conduite d'alimentation des moyens à commande par fluide et du conducteur électrique.

De toute façon, l'invention sera mieux comprise à la lecture de la description qui suit de plusieurs modes de réalisation de l'invention, donnés à titre d'exemples non limitatifs. La description se réfère aux figures annexées sur lesquelles on a représenté:

— sur la figure 1, une vue simplifiée en coupe verticale d'un générateur de vapeur à tubes en U dans lequel on a monté le dispositif objet de l'invention;
— sur la figure 2, une vue en perspective partiellement écorchée montrant une plaquette soudée sur le tube, la plaquette comportant le capteur et ses connexions électriques;
— sur la figure 3a, une vue en coupe longitudinale d'un premier mode de réalisation de la tête de soudure;
— sur la figure 3b, une vue en coupe selon le plan BB de la figure 3a;
— sur la figure 4, une vue en coupe longitudinale d'une première variante de réalisation des moyens de raccordement fixés sur la tête de soudage;
— sur la figure 5a, une vue en coupe longitudinale d'un deuxième mode de réalisation de la tête de soudage;
— sur la figure 5b, une demi-vue de côté de la figure 5a,
— sur la figure 6, une vue en coupe longitudinale d'un troisième mode de réalisation de la tête de soudage,
— sur la figure 7 une vue en coupe longitudinale schématique d'une quatrième mode de réalisation de la tête de soudage illustrant également une deuxième variante de réalisation des moyens de raccordement fixés sur cette tête de soudage,
— sur la figure 8, une vue à plus grande échelle de la tête de soudage de la figure 7, illustrant de façon schématique, en traits discontinus, le soudage d'une plaque liée à un appareil tel qu'un accéléromètre et, en traits pleins, le recul de la tête de soudage après que le soudage ait été effectué,
— sur la figure 9a, une vue encore à plus grande échelle de la tête de soudage de la figure 7,
— sur la figure 9b, une vue en coupe selon le plan BB de la figure 9a, et
— sur la figure 9c, une section illustrant les moyens de raccordement fixés sur la tête de soudage, et leur centrage à l'intérieur du tube, prise selon le plan CC de la figure 9a.

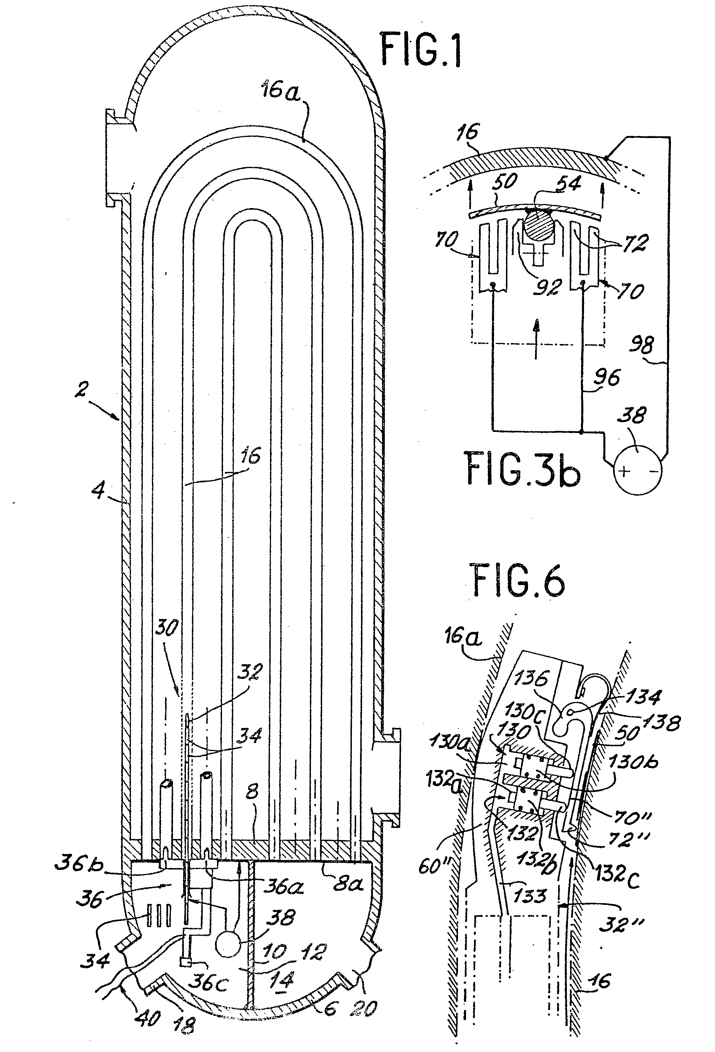

Sur la figure 1, on a représenté en coupe verticale un générateur de vapeur du type à tube U dans lequel on a monté le dispositif de soudage électrique selon l'invention. Sur cette figure, on retrouve de façon connue, l'enveloppe externe 4 du générateur de vapeur portant la référence générale 2, le fond 6 de l'enveloppe externe que définit avec la plaque à tubes horizontale 8 et la cloison verticale 10 un collecteur d'entrée 12 et un collecteur de sortie 14 pour le fluide primaire (c'est-à-dire l'eau circulant dans le générateur de vapeur) et les tubes en U référencés 16 dont les deux extrémités sont montées dans la plaque à tubes 8, ces extrémités débouchant respectivement dans les collecteurs d'entrée 12 et de sortie 14. On a représenté également les conduites d'entrée 18 et de sortie 20 du fluide primaire débouchant dans les deux demi-boîtes à eau. En outre, la boîte à eau comporte un trou d'homme permettant les interventions sur la plaque à tubes 8, ce trou d'homme n'ayant pas été représenté sur la figure 1.

Sur cette figure, on a représenté en cours de mise en place le dispositif de soudage électrique qui porte la référence générale 30. Ce dispositif comprend essentiellement une tête de soudage 32, des moyens de raccordement 34, un ensemble fixe 36 fixé sur la plaque à tubes et des moyens 38 d'alimentation électrique et 40 d'alimentation en fluide sous pression, par exemple en air comprimé. La tête de soudage 32 qui sera décrite ultérieurement est fixée à l'extrémité de moyens de raccordement 34 constitués dans une première variante par une succession de barres de raccordement solidarisées entre elles au fur et à mesure de leur introduction dans le tube 16. Pour cette description générale, il suffit de savoir que la tête de soudage nécessite une alimentation en fluide comprimé et en énergie électrique et que les moyens de raccordement 34 doivent assurer la continuité d'une conduite d'alimentation en fluide comprimé et de conducteurs électriques. La tête de soudage 32 et les moyens de raccordement 34 seront décrits plus en détail ultérieurement. Sur la face inférieure 8a de la plaque à tubes est fixé le dispositif fixe 36 qui permet un déplacement micrométrique de la tête de soudage 32 par l'intermédiaire des moyens de raccordement 34. Ce dispositif 36 comporte une embase 36a fixée sur la plaque à tubes 8 et positionnée autour du tube 16 par des pions de centrage 36b. L'extrémité inférieure des moyens de raccordement 34 est montée dans le dispositif micrométrique 36c, de type connu, qui permet d'obtenir un déplacement très précis de la tête de soudage dans le tube 16. Bien entendu, après la mise en place des moyens de raccordement 34, on alimente ceux-ci en fluide comprimé par le tube 40 et en énergie électrique par le poste d'alimentation électrique 38 de soudure approprié de type classique.

Comme on l'a déjà indiqué, l'objet de l'invention est de permettre le soudage d'une plaquette métallique portant par exemple un capteur de mesure sur la paroi interne des tubes 16. La tête de soudage 32 a deux fonctions: d'une part, elle permet lors de la progression de l'ensemble du dispositif dans le tube 16 d'entraîner en même temps la plaquette à souder et d'autre part, elle permet, lorsque le positionnement de la plaquette a été effectué, de réaliser des points de soudure pour obtenir la solidarisation de la plaquette. Bien entendu, la solidarisation convenable de la plaquette nécessite la réalisation d'un grand nombre de points de soudure à des positions très précises.

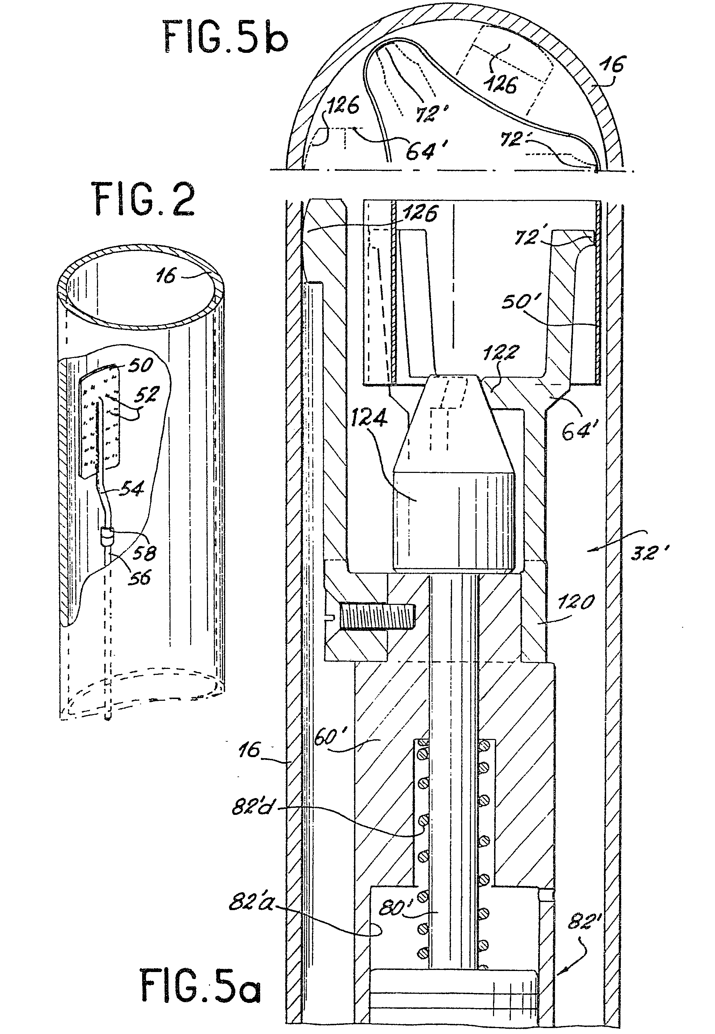

Sur la figure 2, on a représenté en perspective et en vue partiellement écorchée, la plaquette 50 fixée sur la paroi du tube 16. On a représenté d'une part les différents points de soudure 52 disposés selon des cercles du tube 16 et d'autre part, la jauge proprement dite 54 fixée sur la plaquette support 50, cette jauge 54 étant raccordée au câble électrique 56 par le connecteur 58. Le câble coaxial 56 permet bien entendu de recueillir les informations relevés par la jauge 54.

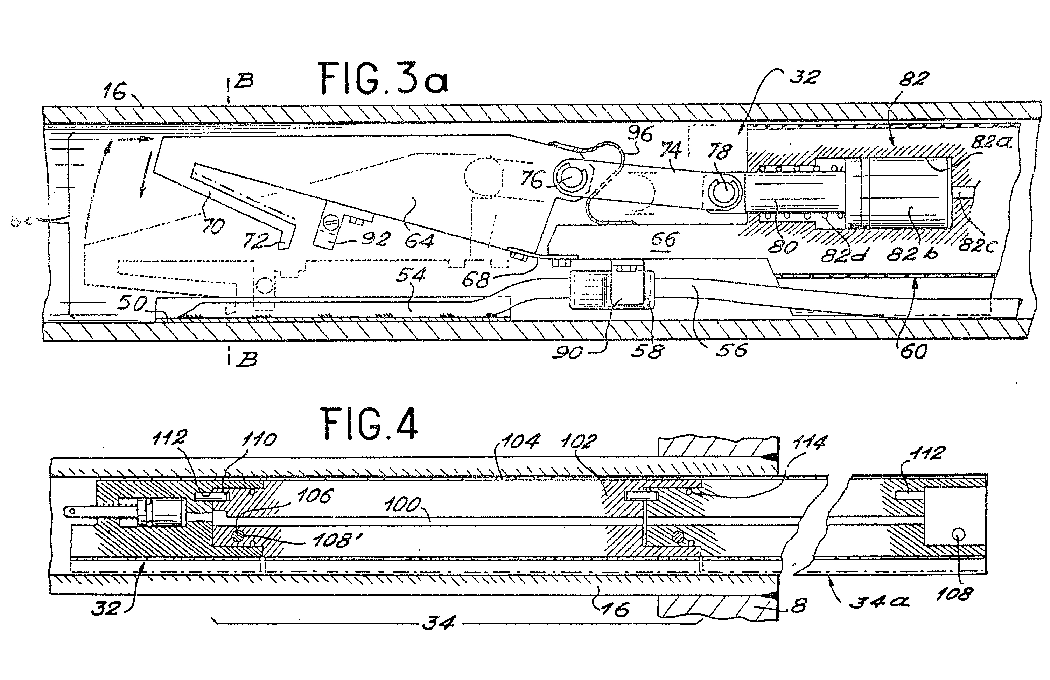

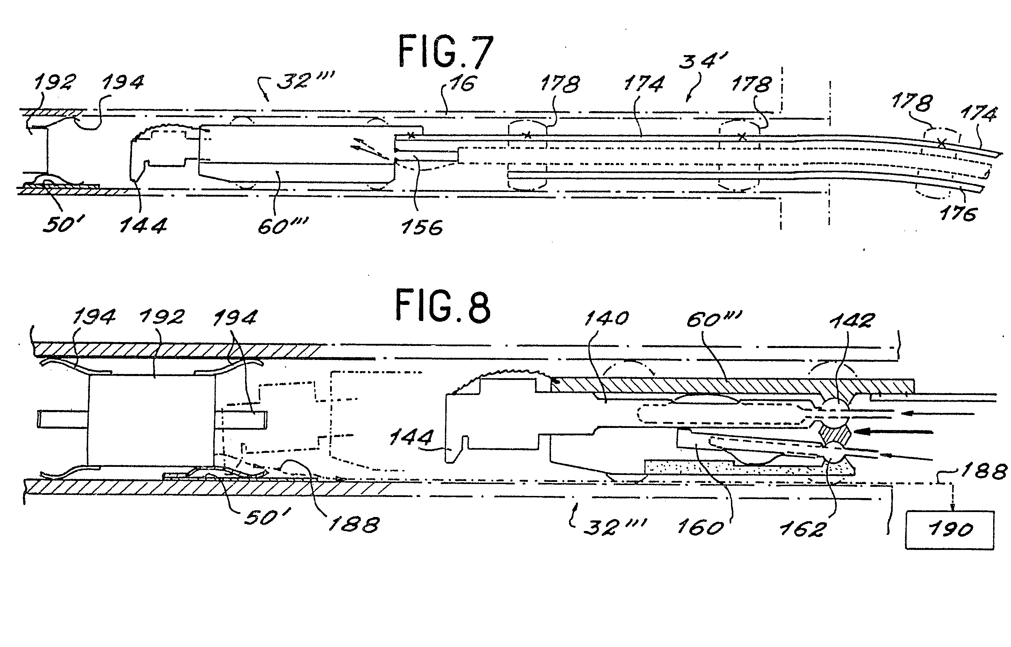

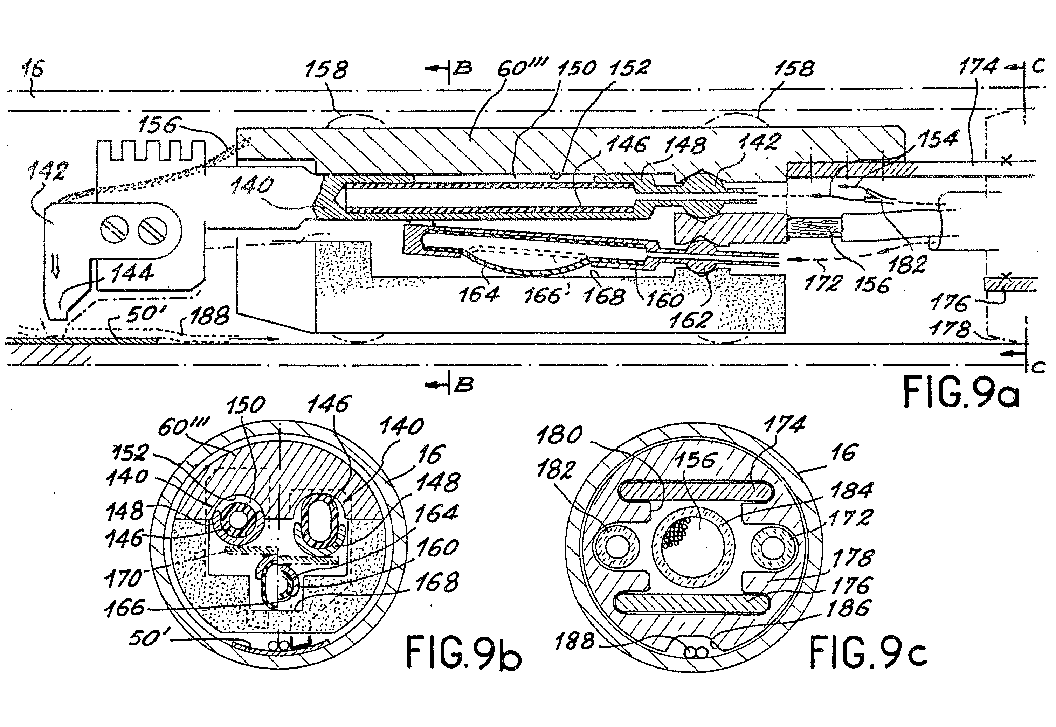

Sur les figures 3a, 5a, 6 et 9a, on a représenté quatre modes de réalisation préférés de la tête de soudage. La figure 3a correspond au cas où le soudage doit être effectué dans les parties rectilignes du tube, et où la plaquette a une largeur limitée; la tête de soudage de la figure 5a correspond au cas où la soudure doit être effectuée sur une partie rectiligne des tubes, mais où la plaquette à souder a par exemple la forme d'un manchon; le mode de réalisation représenté sur la figure 6 correspond au cas où la soudure doit être effectuée dans une partie 16a courbe du tube; enfin, la tête de soudage de la figure 9a est plus particulièrement adaptée à la mise en place d'un accéléromètre indifféremment dans une partie de tube courbe ou rectiligne.

La tête de soudage 32 de la figure 3a comporte, d'une part, un corps 60 de forme sensiblement cyclindrique sur lequel est monté un ensemble 62 formant électrode. Dans ce mode de réalisation, l'ensemble formant porte-électrode 62 est constitué par un bras 64 fixé sur un prolongement 66 du corps 60 par une liaison souple 68. Ce bras 64 est muni à son extrémité d'une plaque 70 comportant plusieurs pointes telles que 72 alignées sur la plaque 70 et formant autant d'électrodes de soudage. Le pivotement du bras 64 par rapport au corps 60 autour de l'axe fictif défini par la liaison souple 68 est assuré par une biellette 74 articulée par rapport au bras 64 autour de l'axe 76 articulée également autour de l'axe 78 par rapport à la tige 80 d'un vérin pneumatique portant la référence générale 82. Ce vérin 82 est constitué par une chambre 82a ménagée dans le corps 60 de la tête de soudage 32 et dans laquelle peut coulisser un piston 82b sur lequel est fixée la tige 80. Une conduite 82c assure l'alimentation de la chambre 82a en fluide sous pression. Bien entendu, de façon classique, la tige de piston 80 est entourée par un ressort de rappel 82d. On comprend que si l'on commande le vérin 82, on peut provoquer l'abaissement du bras 64 de telle façon que les pointes formant électrodes 72 soient appliquées sur la plaquette 70 et qu'on assure ainsi par passage de l'énergie électrique la réalisation d'autant de soudures qu'il y a de pointes 72 sur la plaque 70.

Comme on l'a indiqué précédemment, une fonction supplémentaire de la tête de soudage est de réaliser également l'entraînement de la plaquette 50 à souder. Pour cela, comme on le voit sur la figure 3a, le corps 60 de la tête de soudage comporte un étrier 90 dans lequel le connecteur 58 est enfoncé avec un serrage réduit. En outre, par exemple sur la partie inférieure du bras 64, on trouve un deuxième étrier 92 dans lequel le capteur 54 est également engagé.

Sur la figure 3b, on a représente en coupe selon le plan BB la tête de soudage. On y retrouve la plaque 70 qui comporte en fait quatre pointes alignées 72 constituant les électrodes. Entre les deux groupes de deux électrodes, on retrouve l'étrier 92 enserrant le capteur 54. On a également représenté schématiquement sur cette figure l'alimentation électrique 96 qui relie le corps 60 conducteur de la tête de soudage au bras qui est également conducteur. On a représenté également de façon symbolique le conducteur 98 qui relie la source d'énergie électrique 38 à la paroi du tube 16 constituant le deuxième conducteur pour le soudage.

Sur la figure 4, on a représenté un mode de réalisation des moyens de raccordement 34, dans lequel ces moyens sont constitués par des barres de raccordement mises bout à bout. La barre, dans sa partie courante, est constituée par une conduite centrale 100 pour la circulation du fluide comprimé. Cette conduite est entourée par un corps conducteur 102 assurant la transmission de l'énergie électrique vers des électrodes 72. L'ensemble est entouré par une gaine isolante 104 isolant la partie conductrice 102 de la paroi du tube 16. A chaque extrémité, la barre 34 est munie de moyens de raccordement mécaniques qui assurent la continuité entre les différentes portions de conduite 100 associées à chaque barre 34 et également la continuité électrique. Ils assurent également la continuité entre la conduite 100 et la conduite 82c ménagée dans la tête de soudure ainsi que la continuité électrique entre la première barre de raccordement et le corps de la tête de soudage. Pour cela, on trouve entre les barres, des dispositifs de verrouillage. Par exemple, ce dispositif de verrouillage est constitué par une goupille 106 insérée dans les orifices 108 et 108' ménagés respectivement dans les extrémités de deux barres 34 consécutives ou dans la tête de soudage 32 et la première barre. En outre, un pion de centrage 110 coopérant avec un trou borgne 112 de la barre adjacente permet le positionnement et la solidarisation en rotation de deux barres consécutives. Des joints d'étanchéité symbolisés par la référence 114 assurant l'étanchéité entre deux barres consécutives et en particulier l'étanchéité entre deux sections consécutives de conduites 100. On comprend qu'ainsi, on réalise une conduite pour le fluide comprimé continu depuis le tuyau 40 jusqu'au piston de commande 82. Sur la figure 4, on voit que l'extrémité de la barre référencée 34a dépasse hors de la plaque à tubes et est donc disponible pour être raccordée à une barre de raccordement supplémentaire.

Le fonctionnement du dispositif représenté sur les figures 3a, 3b et 4 découle clairement de la description précédente. Dans un premier temps, on introduit la tête de soudage 32 sur laquelle on a fixé de façon amovible la plaquette 50 à souder. On fixe successivement les différentes barres de raccordement 34 jusqu'à ce que la tête de soudage arrive dans la zone du tube 16 où l'on veut fixer la plaquette 50. On monte alors l'extrémité inférieure de la dernière barre de raccordement dans le dispositif de déplacement micrométrique 36c. On branche également la source d'énergie électrique 38 et l'alimentation en fluide comprimé 40. En actionnant une première fois le vérin 82b, on réalise un premier ensemble de points de soudure qui, en même temps, fixe la plaquette 50 sur la paroi, puis on agit sur le vérin pour rapprocher les électrodes du corps de la tête de soudage. Simultanément, la plaquette 50 est dégagée de la tête de soudage. A l'aide du dispositif mocrométrique 36c, on fait descendre ou monter la tête de soudage d'un pas p pour réaliser une deuxième ligne de soudure, en actionnant à nouveau le vérin. On provoque ce déplacement jusqu'à ce que l'ensemble de la plaquette 50 soit fixé.

Sur la figure 5a, on a représenté une variante de réalisation de la tête de soudage. Celle-ci permet de réaliser simultanément plusieurs points de soudure décalés d'un certain angle sur un cercle du tube 16. On retrouve la tête de soudage 60' de forme générale cylindrique. Dans cette tête de soudage est ménagé un vérin 82' qui est identique au vérin 82 de la figure 3a. Il comprend la chambre 82'a, le piston 82'b sur lequel est fixée la tige du vérin 80' et le ressort de rappel 82'd. Dans ce mode de réalisation, chaque pointe formant électrode 72' est fixée sur un bras 64' fixé lui-même en 120 sur le corps 60'. Ce bras est déformable. Le bras comporte en outre une partie formant talon 122 qui peut coopérer avec une pièce tronconique 124 fixée à l'extrémité de la tige de vérin 80' et formant came. En outre, des pièces d'appui telles que 126 sont disposées symétriquement par rapport à chaque bras 64'. Par exemple, on trouve trois bras 64' décalés chacun de 120° et trois pièces d'appui 126 également décalées de 120°.

On comprend qu'en agissant sur le vérin 82', on provoque le déplacement de la pièce 124 qui peut provoquer l'écartement des bras 64' et donc l'application avec pression des électrodes 72' sur le manchon 50' qui est de plus appliqué avec pression sur la paroi du tube 16. On peut ainsi réaliser la soudure de ce manchon 50' par points. Bien entendu, à cette tête de soudage, on associe des barres de raccordement 34 et de déplacement micrométrique identiques à celles qui ont été représentées sur la figure 4. L'entraînement du manchon 50' est obtenu en plaçant celui-ci autour de la tête de soudage et en appliquant une pression sur les bras 64' jusqu'à ce que la tête de soudage arrive à la position voulue dans le tube 16.

Sur la figure 6, on a représenté un troisième mode de réalisation de la tête de guidage référencée 32″ et qui permet d'effectuer la soudure d'une plaquette sur la partie coudée du tube 16 qui porte alors la référence 16a. Selon ce mode de réalisation, la tête de soudage 32″ comporte un corps sensiblement cylindrique 60″ dans lequel sont disposés deux vérins 130 et 132 dont les axes sont perpendiculaires à l'axe du corps 60″ et donc à l'axe du tube 16. Ces deux vérins sont alimentés par une conduite commune 133 ménagée dans le corps 60″ et susceptible d'être raccordée aux conduites 100 ménagées dans les différentes barres de raccordement 34. Ces deux vérins comportent bien sûr de façon connue, une chambre 130a (132a), un piston 130b (132b) et une tige de piston 130c (132c). Les pointes fomant électrodes 72″ sont montées sur une plaque 70″ comportant une partie recourbée et articulée par rapport au corps autour d'une axe 134 orthogonal à l'axe du corps 60″. Au-delà de cet axe, la plaque 70″ se prolonge par un talon 136. Un ressort de rappel 138 agit d'une part sur le talon 136 et, d'autre part, sur la paroi du tube 16 tendant à rapprocher les pointes formant électrodes 72″ du corps de la tête de soudage. Les tiges 130c et 132c des vérins sont fixées sur la plaque 70″ entre l'axe 134 et les pointes formant électrodes 72″. Bien entendu, il pourraît y avoir plus de deux vérins. On comprend qu'en envoyant un fluide comprimé par la conduite 133 dans les chambres 130a, 132a des vérins 130 et 132, on plaque les électrodes 72″ sur la plaquette et sur la paroi du tube 16. Si l'on envoie en même temps de l'énergie électrique, on réalise une série de points de soudure.

Selon ce mode de réalisation, la tête de soudure est toujours montée à l'extrémité d'un certain nombre de barres de raccordement. Cependant, comme on l'a expliqué et grâce à la disposition perpendiculaire des vérins 130 et 132 et de leurs tiges, la tête de soudage 32″ a une longueur réduite qui permet d'effectuer les soudures dans les parties courbes 16a des tubes. En conséquence, tout en ayant une certaine rigidité axiale, les barres de raccordement 34 doivent présenter néanmoins une certaine flexibilité pour pouvoir passer dans les parties courbes 16a des tubes 16. Dans ce but et si l'on se réfère à la figure 4, les conduites pour le fluide sous pression 100 seront réalisées, par exemple, en rilsan et le conducteur 102 ne sera plus une pièce massive, mais par exemple des tresses conductrices de l'électricité.

Bien entendu, le mode de mise en œuvre du dispositif selon la variante de réalisation représentée sur la figure 6 est par ailleurs identique à celui qui a été décrit en liaison avec le mode de réalisation de la figure 3a. En particulier l'entraînement de la plaquette à souder se fait comme dans le cas de la figure 3a.

Enfin, on a représenté sur les figures 7 à 9 un quatrième mode de réalisation de la tête de soudage, référencée 32‴, ainsi qu'une deuxième variante de réalisation des moyens de raccordement, référencés 34′. Bien que cette variante soit particulièrement adaptée à la mise en place d'un appareil tel qu'un accéléromètre dans un tube courbe, elle peut aussi être utilisée pour mettre en place une plaquette remplissant une autre fonction, et quelle que soit la forme du tube.

Dans le mode de réalisation des figures 7 à 9, la tête de soudage 32‴ comprend un corps sensiblement cylindrique 60‴ dans lequel deux bras 140 (voir figure 9b) sont articulés à l'une de leurs extrémités par des rotules 142, de façon à pouvoir pivoter, notamment autour d'un axe commun orthogonal par rapport à celui du corps 60‴. Les bras 140 sont disposés côte à côte et se prolongent dans la direction de l'axe du corps pour faire saillie à l'extrémité de ce dernier par leur seconde extrémité, qui porte une plaque 142 définissant sur sa face tournée vers le tube 16 au moins une pointe 144 formant électrode.

Dans ce mode de réalisation, les moyens pour appliquer les pointes 144 contre le tube sont constitués par des manchons déformables 146 disposés dans des enveloppes tubulaires rigides 148 constituant la partie centrale des bras 140. De façon plus précise, les enveloppe 148 sont percées de fenêtres 150 sur leur face diamétralement opposée à celle qui est définie par les pointes 144. Les enveloppes 148 étant reçues dans des évidements complémentaires formant surfaces d'appui 152, formés dans le corps 60‴ et disposant d'un certain jeu en éloignement de ces surfaces, on conçoit comme l'illustre la figure 9b, dans sa moitié droite, que la mise sous pression des manchons 146 a pour conséquence de déformer ceux-ci au niveau des fenêtres 150, de telle sorte que la venue des manchons en contact des surfaces d'appui 152 conduit à un pivotement des bras 140 autour des rotules 142 dans le sens correspondant à l'application des pointes 144 contre la plaque à souder 50′. Comme le montrent les figures 8 et 9a, la mise sous pression des manchons 146a s'effectue en injectant de l'air comprimé acheminé jusqu'à la tête de soudage par des tuyaux souples 154 raccordés directement sur des passages ménagés dans les rotules 142. L'alimentation électrique nécessaire au soudage s'effectue par un câble de cuivre extra souple multibrins 156 raccordée à la partie supérieure conductrice du corps 60‴, elle-même raccordée aux plaques 142 par un fil 156. Le retour électrique s'effectue par le tube 16, comme dans les variantes précédentes. La partie supérieure conductrice du corps 60‴ est isolée du tube par des patins isolants 158, alors que la partie inférieure du corps en considérant la figure 9a, est réalisée en un matériau isolant.

Le rappel et le maintien des bras 140 vers la position de repos dans laquelle les pointes 144 formant électrodes sont éloignées de la plaque à souder 50′ sont réalisés dans ce mode de réalisation au moyen d'une autre enveloppe tubulaire 160 également montée pivotante dans le corps 60‴, par l'intermédiaire d'une rotule 162, autour d'un axe orthogonal à l'axe du corps 60‴ et parallèle à l'axe commun défini par les rotules 142. L'enveloppe tubulaire 160 reçoit également un manchon déformable 164 dont la mise sous pression commande la déformation au travers d'une fenêtre 166 formée dans l'enveloppe 160, en vis-à-vis d'une surface d'appui 168 formée dans le corps 60‴. Comme le montre la figure 9a, les rotules 142 et 162 sont disposées dans un même plan radial par rapport à la tête de soudage et la fenêtre 166 de l'enveloppe 160 est disposée à l'opposé des bras 140, de telle sorte que la mise sous pression du manchon 164 a pour effet de solliciter les bras 140 vers les surfaces d'appui 152 par l'intermédiaire d'une plaque 170 fixée à l'extrémité de l'enveloppe tubulaire 160 opposée à la rotule 162, du côté des bras 140 (voir figure 9b). L'alimentation du manchon 164 en fluide pneumatique s'effectue par un tuyau souple 172, au travers d'un passage fomé dans la rotule 162.

Les figures 7, 9a et 9c illustrent également une deuxième variante de réalisation des moyens de raccordement, désignée par la référence 34′. Dans cette variante, la tête de soudage 32‴ est fixée par exemple par des vis (non représentées) à un ruban ou lame métallique souple 174 qui peut être enroulé à l'extérieur du tube 16 et introduit sur la longueur désirée à l'intérieur du tube. Ce ruban est doublé par un ruban ou lame métallique souple 176, parallèle et de même nature, mais non fixé à la tête de soudage. Des noix de centrage 178, en matière isolante, sont régulièrement réparties le long des rubans 174 et 176 de manière à les centrer et à assurer les isolations électriques par rapport au tube 16. Les noix de centrage sont d'un diamètre externe légèrement inférieur au diamètre interne du tube et présentent une ouverture centrale 180 recevant les rubans 174 et 176, un tuyau souple 182 alimentant simultanément les tuyaux 154 raccordés aux manchons déformables 146, le tuyau souple 172 alimentant le manchon de rappel 164 et, dans la partie centrale, le câble d'alimentation électrique 156 et sa gaine isolante 184. Une encoche 186 est formée à la périphérie de chacune des noix de centrage 178 pour assurer le passage des fils 188 raccordant l'appareil de mesure à souder dans le tube 16 aux instruments de contrôle externes 190 (figure 8).

Les figures 7 et 8 illustrent notamment l'application du dispositif de soudage selon l'invention à la mise en place d'un accéléromètre 192 dans un tube 16 de générateur de vapeur. On voit que l'accéléromètre est placé à l'avant de la tête de soudage 32‴ et poussé par cette dernière à l'intérieur du tube, son centrage étant obtenu au moyen de pattes métalliques souples 194 disposées à l'avant et à l'arrière. L'une de ces pattes disposée vers l'arrière est soudée avant son introduction dans le tube à la plaquette 50′, et les fils 188 assurant l'alimentation et la transmission des signaux émis par l'accéléromètre après sa mise en place sont disposés entre les bras 140 portant les pointes 144 formant électrodes et passant en-dessous du corps 60‴ de la tête de soudage. La plaquette 50′ peut ainsi être soudée au tube 16 de part et d'autre des fils 188 par la mise sous pression simultanée des manchons 146 faisant basculer les bras 140 pour amener les pointes 144 en contact avec la plaquette. Le circuit électrique est alors fermé et la soudure peut s'effectuer. Après rappel des bras par mise sous pression du manchon 164, la tête de soudage peut reculer légèrement pour réaliser simultanément deux nouvelles soudures de part et d'autre des fils 188, et ainsi de suite. Lorsque les soudures sont terminées, la tête de soudage est ramenée en arrière comme l'illustrent les figures 7 et 8.

Bien entendu, les différents modes de réalisation que viennent d'être décrits peuvent être combinés à volonté. Ainsi, les moyens de raccordement 34′ décrits en se référant aux figures 7 à 9 peuvent être utilisés dans les variantes décrites précédemment, et inversement.

Il découle de la description précédente que grâce au dispositif objet de l'invention, on peut effectivement réaliser, d'une part la mise en place et, d'autre part, le soudage de façon très précise et très efficace des plaquettes pouvant éventuellement avoir la forme de manchons sur la paroi d'un tube dont le diamètre est très réduit et qui n'est accessible que par une de ses extrémités. En outre, selon certains de ces modes de réalisation, le dispositif permet d'effectuer une telle fixation par soudure dans la partie courbe des tubes.

**Revendications**
**pour les Etats contractants: BE, SE**

1. Dispositif de soudage électrique d'une plaquette métallique (50, 50′) sur la paroi interne d'un tube (16) de faible diamètre, caractérisé en ce qu'il comprend:
- une tête de soudage (32, 32′, 32″, 32‴) dont le diamètre extérieur est inférieur au diamètre intérieur dudit tube, ladite tête de soudage comprenant un corps (60, 60′, 60″, 60‴), au moins une électrode (72, 72′, 72″, 144) apte à être déplacée par rapport audit corps selon une direction sensiblement perpendiculaire à l'axe dudit corps pour exercer une pression sur ladite plaquette placée sur la paroi dudit tube, et des moyens à commande par fluide (82, 82′, 130-132, 146) logés dans ledit corps (60, 60′, 60″) pour déplacer l'électrode dans ladite direction,
- des moyens de raccordement (34, 34′) de longueur variable portant la tête de soudage de façon à assurer son guidage et son déplacement à l'intérieur du tube, lesdits moyens de raccordement comprenant au moins une conduite d'alimentation (100, 182) des moyens pour déplacer l'électrode et au moins un conducteur électrique (102, 156) pour l'alimentation de ladite électrode,
- des moyens (36) aptes à être solidarisés à l'extrémité ouverte dudit tube pour assurer un déplacement micrométrique desdits moyens de raccordement et de la tête de soudage qu'ils portent dans ledit tube,
- des moyens (40) pour alimenter en fluide sous pression ladite conduite d'alimentation, et
- des moyens (38) d'alimentation électrique pour ledit conducteur électrique.

2. Dispositif selon la revendication 1, caractérisé en ce que les moyens à commande par fluide comprennent au moins un vérin pneumatique (82, 82', 130-132).

3. Dispositif selon la revendication 2, caractérisé en ce que le vérin penumatique (82) comprend un piston (82b) dont le déplacement est prallèle à l'axe du corps (60) et une tige (80) solidaire du piston (82b) et reliée par une bielle (74) à un bras (64) articulé par rapport au corps autour d'un axe (68) de direction orthogonale à l'axe du corps, ledit bras (64) portant une plaque (70) présentant sur sa face externe par rapport au corps au moins une pointe (72) formant ladite électrode.

4. Dispositif selon la revendication 2, caractérisé en ce que le vérin pneumatique (82') comprend un piston dont le déplacement est prallèle à l'axe du corps (60') et une tige (80') solidaire du piston et portant un mandrin (124) qui coopère avec au moins une pièce formant came (122) solidaire d'un bras déformable (64') solidaire du corps à l'une de ses extrémités portant à son extrémité opposée et sur sa face externe par rapport au corps au moins une pointe (72') formant ladite électrode.

5. Dispositif selon la revendication 2, caractérisé en ce que le vérin pneumatique (130-132) comprend un piston (130b-132b) dont le déplacement est orthogonal à l'axe du corps (60'') et une tige (130c-132c) solidaire du piston et dont l'extrémité libre coopère avec une pièce (70'') articulée par rapport au corps à l'une de ses extrémités autour d'un axe (134) de direction orthogonale à celui du corps, l'extrémité opposée de ladite pièce portant sur sa face externe par rapport au corps au moins une pointe (72'') formant ladite électrode.

6. Dispositif selon la revendication 1, caractérisé en ce que les moyens à commande par fluide comprennent au moins un manchon déformable (146) logé dans une enveloppe rigide (148) présentant une fenêtre (150) autorisant la déformation du manchon hors de l'enveloppe dans une direction donnée.

7. Dispositif selon la revendication 6, caractérisé en ce qu'il comprend au moins un premier manchon déformable (146) logé dans une première enveloppe rigide (148) définissant une partie d'un bras (140) articulé par rapport au corps à l'une de ses extrèmités autour d'un axe (142) orthogonal à celui du corps, l'extrémité opposée dudit bras portant sur sa face externe par rapport au corps au moins une pointe (144) formant ladite électrode, la fenêtre (150) formée dans la première enveloppe étant disposée en regard d'une première surface d'appui (152) formée sur ledit corps, et au moins un deuxième manchon déformable (164) logé dans une deuxième enveloppe rigide (160) articulée par rapport au corps à l'une de ses extrémités autour d'un axe (162) parallèle à l'axe d'articulation dudit bras, la fenêtre (166) formée dans la deuxième enveloppe étant disposée en regard d'une deuxième surface d'appui (168) formée sur ledit corps et l'extrémité opposée de la deuxième enveloppe (160) étant susceptible de coopérer avec le bras par sa face opposée à la fenêtre correspondante (166) pour maintenir la pointe (144) formant électrode éloignée dudit tube.

8. Dispositif selon l'une quelconque des revendications précédentes, caractérisé en ce que les moyens de raccordement comprennent des barres de raccordement (34) aptes à être introduites bout à bout dans le tube (16), chaque barre comprenant une section (100) de ladite conduite d'alimentation et une section (102) dudit conducteur électrique, chaque barre comprenant à ses extrémités des moyens (114) de connexion étanche des sections de la conduite d'alimentation et des moyens (106, 110) de liaison électrique entre les sections de conducteur électrique.

9. Dispositif selon la revendication 8, caractérisé en ce que lesdites barres de raccordement (34) sont réalisées de telle manière qu'elles présentent une certaine flexibilité selon leur grande largeur.

10. Dispositif selon l'une quelconque des revendications 1 à 7, caractérisé en ce que les moyens de raccordement comprennent au moins un ruban souple (174, 176) apte à être introduit dans le tube (16) sur une longueur donnée, et des moyens de centrage (178) régulièrement répartis le long dudit ruban et assurant simultanément le centrage de la conduite d'alimentation (182) des moyens à commande par fluide et du conducteur électrique (156).

11. Dispositif selon l'une quelconque des revendications précédentes, caractérisé en ce que ledit corps (60) de la tête de soudage comprend des moyens de fixation temporaire (90) de ladite plaquette à souder (50).

**Revendications pour les Etats contractants: CH, DE, FR, GB, IT, LI**

1. Dispositif de soudage électrique d'une plaquette métallique (50, 50') sur la paroi interne d'un tube (16) de faible diamètre, comprenant:
- une tête de soudage (32, 32', 32'', 32''') dont le diamètre extérieur est inférieur au diamètre intérieur dudit tube, ladite tête de soudage comprenant un corps (60, 60', 60'', 60'''), au moins une électrode (72, 72', 72'', 144) apte à être déplacée par rapport audit corps selon une direction sensiblement perpendiculaire à l'axe dudit corps pour exercer une pression sur ladite plaquette placée sur la paroi dudit tube, et des moyens à commande pour déplacer l'électrode selon ladite direction,

— des moyens de raccordement (34, 34') de longueur variable portant la tête de soudage de façon à assurer son guidage et son déplacement à l'intérieur du tube, lesdits moyens de raccordement comprenant au moins une conduite d'alimentation (100, 182) des moyens pour déplacer l'électrode et au moins un conducteur électrique (102, 156) pour l'alimentation de ladite électrode,

— des moyens (36) aptes à être solidarisés à l'extrémité ouverte dudit tube pour assurer un déplacement micrométrique desdits moyens de raccordement et de la tête de soudage qu'ils portent dans ledit tube,

— des moyens pour actionner lesdits moyens à commande, et des moyens (38) d'alimentation électrique pour ledit conducteur électrique,

caractérisé par le fait que les moyens à commande sont constitués par des moyens à commande par fluide (82, 82', 130-132, 146) logés dans ledit corps (60, 60', 60''), et par le fait qu'il comporte des moyens (40) d'alimentation en fluide sous pression.

2. Dispositif selon la revendication 1, caractérisé en ce que les moyens à commande par fluide comprennent au moins un vérin pneumatique (82, 82', 130-132).

3. Dispositif selon la revendication 2, caractérisé en ce que le vérin pneumatique (82) comprend un piston (82b) dont le déplacement est parallèle à l'axe du corps (60) et une tige (80) solidaire du piston (82b) et reliée par une bielle (74) à un bras (64) articulé par rapport au corps autour d'un axe (68) de direction orthogonale à l'axe du corps, ledit bras (64) portant une plaque (70) présentant sur sa face externe par rapport au corps au moins une pointe (72) formant ladite électrode.

4. Dispositif selon la revendication 2, caractérisé en ce que le vérin pneumatique (82') comprend un piston dont le déplacement est parallèle à l'axe du corps (60') et une tige (80') solidaire du piston et portant un mandrin (124) qui coopère avec au moins une pièce formant came (122) solidaire d'un bras déformable (64') solidaire du corps à l'une de ses extrémités portant à son extrémité opposée et sur sa face externe par rapport au corps au moins une pointe (72') formant ladite électrode.

5. Dispositif selon la revendication 2, caractérisé en ce que le vérin pneumatique (130-132) comprend un piston (130b-132b) dont le déplacement est orthogonal à l'axe du corps (60'') et une tige (130c-132c) solidaire du piston et dont l'extrémité libre coopère avec une pièce (70'') articulée par rapport au corps à l'une de ses extrémités autour d'un axe (134) de direction orthogonale à celui du corps, l'extrémité opposée de ladite pièce portant sur sa face externe par rapport au corps au moins une pointe (72'') formant ladite électrode.

6. Dispositif selon la revendication 1, caractérisé en ce que les moyens à commande par fluide comprennent au moins un manchon déformable (146) logé dans une enveloppe rigide (148) présentant une fenêtre (150) autorisant la déformation du manchon hors de l'enveloppe dans une direction donnée.

7. Dispositif selon la revendication 6, caractérisé en ce qu'il comprend au moins un premier manchon déformable (146) logé dans une première enveloppe rigide (148) définissant une partie d'un bras (140) articulé par rapport au corps à l'une de ses extrémités autour d'un axe (142) orthogonal à celui du corps, l'extrémité opposée dudit bras portant sur sa face externe par rapport au corps au moins une pointe (144) formant ladite électrode, la fenêtre (150) formée dans la première enveloppe étant disposée en regard d'une première surface d'appui (152) formée sur ledit corps, et au moins un deuxième manchon déformable (164) logé dans une deuxième enveloppe rigide (160) articulée par rapport au corps à l'une de ses extrémités autour d'un axe (162) parallèle à l'axe d'articulation dudit bras, la fenêtre (166) formée dans la deuxième enveloppe étant disposée en regard d'une deuxième surface d'appui (168) formée sur ledit corps et l'extrémité opposée de la deuxième enveloppe (160) étant susceptible de coopérer avec le bras par sa face opposée à la fenêtre correspondante (166) pour maintenir la pointe (144) formant électrode éloignée dudit tube.

8. Dispositif selon l'une quelconque des revendications précédentes, caractérisé en ce que les moyens de raccordement comprennent des barres de raccordement (34) aptes à être introduites bout à bout dans le tube (16), chaque barre comprenant une section (100) de ladite conduite d'alimentation et une section (102) dudit conducteur électrique, chaque barre comprenant à ses extrémités des moyens (114) de connexion étanche des sections de la conduite d'alimentation et des moyens (106, 110) de liaison électrique entre les sections de conducteur électrique.

9. Dispositif selon la revendication 8, caractérisé en ce que lesdites barres de raccordement (34) sont réalisées de telle manière qu'elles présentent une certaine flexibilité selon leur grande largeur.

10. Dispositif selon l'une quelconque des revendications 1 à 7, caractérisé en ce que les moyens de raccordement comprennent au moins un ruban souple (174, 176) apte à être introduit dans le tube (16) sur une longueur donnée, et des moyens de centrage (178) régulièrement répartis le long dudit ruban et assurant simultanément le centrage de la conduite d'alimentation (182) des moyens à commande par fluide et du conducteur électrique (156).

11. Dispositif selon l'une quelconque des revendications précédentes, caractérisé en ce que ledit corps (60) de la tête de soudage comprend des moyens de fixation temporaire (90) de ladite plaquette à souder (50).

## Patentansprüche
## für die Vertragsstaaten: BE, SE

1. Vorrichtung zum elektrischen Anschweißen eines Metallplättchens (50, 50') an die Innenwand eines Rohres (16) von kleinem Durchmesser, gekennzeichnet durch

— einen Schweißkopf (32, 32', 32'', 32'''), dessen Außendurchmesser kleiner ist als der Innendurchmesser des Rohres, und welcher einen Körper (60, 60', 60'', 60'''), wenigstens eine zum Ausüben eines Drukkes auf das an die Wand des Rohres angelegte Plättchen in einer zur Achse des Körpers im wesentlichen senkrechten Richtung bewegbare Elektrode (72, 72', 72'', 144) und in dem Körper (60, 60', 60'') angeordnete, fluidgespeiste Betätigungseinrichtungen (82, 82', 130 bis 132, 146) zum Bewegen der Elektrode in der genannten Richtung aufweist,

— Verbindungseinrichtungen (34, 34') von variabler Länge, welche den Schweißkopf in einer dessen Führung und Bewegung im Inneren des Rohres gewährleistenden Weise tragen und welche wenigstens eine Speiseleitung (100, 182) für die Einrichtungen zum Bewegen der Elektrode und wenigstens einen elektrischen Leiter (102, 156) für die Speisung der Elektrode aufweisen,

— eine mit dem offenen Ende des Rohres fest verbindbare Einrichtung (36) zum Gewährleisten einer mikrometrischen Bewegung der Verbindungseinrichtungen und des von diesen getragenen Schweißkopfes in dem Rohr, und

— Einrichtungen (40) zur Speisung der Speiseleitung mit unter Druck gesetztem Fluid,

— und eine Einrichtung (38) für die elektrische Speisung des elektrischen Leiters.

2. Vorrichtung nach Anspruch 1, dadurch gekennzeichnet, daß die fluidgespeisten Betätigungseinrichtungen wenigstens einen pneumatischen Zylinder (82, 82', 130 bis 132) aufweisen.

3. Vorrichtung nach Anspruch 2, dadurch gekennzeichnet, daß der pneumatische Zylinder (82) einen parallel zur Achse des Körpers (60) bewegbaren Kolben (82b) aufweist, sowie eine fest mit dem Kolben verbundene Kolbenstange (80), welche über ein Pleuel (74) mit einem relativ zum Körper um eine zur Achse des Körpers rechtwinklig angeordnete Achse (68) herum verschwenkbar gelagerten Arm (64) verbunden ist, und daß der Arm (64) eine Platte (70) trägt, welche an ihrer in bezug auf den Körper äußeren Oberfläche wenigstens eine die genannte Elektrode darstellende Spitze (72) aufweist.

4. Vorrichtung nach Anspruch 2, dadurch gekennzeichnet, daß der pneumatische Zylinder (82') einen parallel zur Achse des Körpers (60') verschieblichen Kolben enthält, sowie eine fest mit dem Kolben verbundene Kolbenstange (80') mit einem von dieser getragenen Dorn (124), welcher mit wenigstens einem fest mit einem verformbaren Arm (64') verbundenen, einen Quertriebskörper (122) darstellenden Teil zusammenwirkt, wobei der Arm an einem Ende fest mit dem Körper verbunden ist und an der in bezug auf den Körper äußeren Oberfläche des gegenüberliegenden Endes wenigstens eine die genannte Elektrode darstellende Spitze (72') trägt.

5. Vorrichtung nach Anspruch 2, dadurch gekennzeichnet, daß der pneumatische Zylinder (130-132) einen lotrecht zur Achse des Körpers (60'') verschieblichen Kolben (130b-132b) enthält, sowie eine fest mit dem Kolben verbundene Kolbenstange (130c-132c) deren freies Ende mit einem Teil (70'') zusammenwirkt, welches mit einem Ende in bezug auf den Körper um eine zur Achse des Körpers lotrechte Achse (134) verschwenkbar gelagert ist und an der in bezug auf den Körper äußeren Oberfläche seines gegenüberliegenden Endes wenigstens eine die genannte Elektrode darstellende Spitze (72'') trägt.

6. Vorrichtung nach Anspruch 1, dadurch gekennzeichnet, daß die mit einem Fluid gespeisten Betätigungseinrichtungen wenigstens einen verformbaren Rohrkörper (146) aufweisen, welcher in einer starren Umhüllung (148) untergebracht ist, welche ihrerseits ein Fenster (150) hat, welches die Verformung des Rohrkörpers aus der Umhüllung heraus in einer gegebenen Richtung ermöglicht.

7. Vorrichtung nach Anspruch 6, dadurch gekennzeichnet, daß sie wenigstens einen ersten verformbaren Rohrkörper (146) aufweist, welcher in einer ersten starren Umhüllung (148) angeordnet ist, welche einen Teil eines mit einem seiner Enden in bezug auf den Körper um eine zu der des Körpers lotrechte Achse (142) verschwenkbaren und an der in bezug auf den Körper äußeren Oberfläche seines gegenüberliegenden Endes wenigstens eine die genannte Elektrode darstellende Spitze (144) tragenden Arms (140) darstellt, wobei das in der ersten Umhüllung geformte Fenster (150) einer an dem Körper gebildeten ersten Stützfläche (152) gegenüberliegt, und daß wenigstens ein zweiter verformbarer Rohrkörper (164) vorgesehen ist, welcher in einer zweiten starren Umhüllung (160) angeordnet ist, welche ihrerseits an einem Ende in bezug auf den Körper um eine zu der Schwenkachse des Arms parallele Achse (162) herum verschwenkbar gelagert ist, wobei das in der zweiten Umhüllung geformte Fenster (166) einer am Körper geformten zweiten Stützfläche (168) gegenüberliegt und die zweite Umhüllung (160) mit ihrer dem zugeordneten Fenster (166) gegenüberliegenden Seite in Anlage am Arm bringbar ist, um die die Elektrode darstellende Spitze (144) von dem Rohr abgehoben zu halten.

8. Vorrichtung nach einem der vorstehenden Ansprüche, dadurch gekennzeichnet, daß die Verbindungseinrichtungen mit den Enden aneinanderstoßend in das Rohr (16) einführbare Verbindungsstangen (34) aufweisen, von denen jede einen Abschnitt (100) der Speiseleitung sowie einen Abschnitt (102) des elektrischen Leiters enthält, wobei jede Stange an ihren Enden Einrichtungen (114) für die abdichtende Verbindung der Abschnitte der Speiseleitung miteinander sowie Einrichtungen (106, 110) für die elektrische Verbindung der Abschnitte des elektrischen Leiters miteinander aufweist.

9. Vorrichtung nach Anspruch 8, dadurch gekennzeichnet, daß die Verbindungsstangen (34) derart ausgebildet sind, daß sie je nach ihrer Gesamtlänge eine gewisse Flexibilität aufweisen.

10. Vorrichtung nach einem der Ansprüche 1 bis 7, dadurch gekennzeichnet, daß die Verbindungseinrichtungen wenigstens ein flexibles Band (174, 176), welches auf eine gegebene Länge in das Rohr (16) einführbar ist, sowie gleichmäßig entlang dem Band verteilt angeordnete Zentriereinrichtungen (178) aufweisen, welche gleichzeitig die Zentrierung der Speiseleitung (182) für die mit einem Fluid gespeiste Betätigungseinrichtungen sowie des elektrischen Leiters (156) gewährleisten.

11. Vorrichtung nach einem der vorstehenden Ansprüche, dadurch gekennzeichnet, daß der Körper (60) des Schweißkopfs Einrichtungen (90) für die vorläufige Fixierung des anzuschweißenden Plättchens (50) aufweist.


**Patentansprüche für die Vertragsstaaten: CH, DE, FR, GB, IT, LI**


1. Vorrichtung zum elektrischen Anschweißen eines Metallplättchens (50, 50′) an die Innenwand eines Rohrs (16) von kleinem Durchmesser, umfassend:
— einen Schweißkopf (32, 32′, 32″, 32‴), dessen Außendurchmesser kleiner ist als der Innendurchmesser des Rohrs, und welcher einen Körper (60, 60′, 60″, 60‴), wenigstens eine zur Ausübung eines Drucks auf das an die Wand des Rohrs angelegte Plättchen in einer zur Achse des Körpers im wesentlichen lotrechten Richtung bewegbare Elektrode (72, 72′, 72″, 144) und Betätigungseinrichtungen zum Bewegen der Elektrode in der genannten Richtung aufweist,
— eine variable Länge aufweisende, den Schweißkopf tragende Verbindungseinrichtungen (34, 34′) zum Führen und Bewegen des Schweißkopfs im Inneren des Rohrs, welche wenigstens eine Leitung (100, 182) für die Speisung der Einrichtungen zum Bewegen der Elektrode und wenigstens einen elektrischen Leiter (102, 156) für die Speisung der Elektrode aufweisen,
— eine mit dem offenen Ende des Rohrs fest verbindbare Einrichtung (36) zum Gewährleisten einer mikrometrischen Bewegung der Verbindungseinrichtungen und des von diesen getragenen Schweißkopfs in dem Rohr und
— eine Einrichtung zum Betätigen der Betätigungseinrichtungen sowie eine Einrichtung (38) für die elektrische Speisung des elektrischen Leiters,

dadurch gekennzeichnet, daß die Betätigungseinrichtungen aus in dem Körper (60, 60′, 60″) angeordneten, mit einem Fluid gespeisten Betätigungseinrichtungen (82, 82′, 130-132, 146) gebildet sind und daß die Vorrichtung Einrichtungen (40) für die Speisung mit einem Fluid unter Druck aufweist.

2. Vorrichtung nach Anspruch 1, dadurch gekennzeichnet, daß die mit einem Fluid gespisten Betätigungseinrichtungen wenigstens einen pneumatischen Zylinder (82, 82′, 130-132) aufweisen.

3. Vorrichtung nach Anspruch 2, dadurch gekennzeichnet, daß der pneumatische Zylinder (82) einen parallel zur Achse des Körpers (60) bewegbaren Kolben (82b) aufweist, sowie eine fest mit dem Kolben verbundene Kolbenstange (80), welche über ein Pleuel (74) mit einem relativ zum Körper um eine zur Achse des Körpers rechtwinklig angeordnete Achse (68) herum verschwenkbar gelagerten Arm (64) verbunden ist, und daß der Arm (64) eine Platte (70) trägt, welche an ihrer in bezug auf den Körper äußeren Oberfläche wenigstens eine die genannte Elektrode darstellende Spitze (72) aufweist.

4. Vorrichtung nach Anspruch 2, dadurch gekennzeichnet, daß der pneumatische Zylinder (82′) einen parallel zur Achse des Körpers (60′) verschieblichen Kolben enthält, sowie eine fest mit dem Kolben verbundene Kolbenstange (80′) mit einem von dieser getragenen Dorn (124), welcher mit wenigstens einem fest mit einem verformbaren Arm (64′) verbundenen, einen Quertriebskörper (122) darstellenden Teil zusammenwirkt, wobei der Arm an einem Ende fest mit dem Körper verbunden ist und an der in bezug auf den Körper äußeren Oberfläche des gegenüberliegenden Endes wenigstens eine die genannte Elektrode darstellende Spitze (72′) trägt.

5. Vorrichtung nach Anspruch 2, dadurch gekennzeichnet, daß der pneumatische Zylinder (130-132) einen lotrecht zur Achse des Körpers (60″) verschieblichen Kolben (130b-132b) enthält, sowie eine fest mit dem Kolben verbundene Kolbenstange (130c-132c) deren freies Ende mit einem Teil (70″) zusammenwirkt, welches mit einem Ende in bezug auf den Körper um eine zur Achse des Körpers lotrechte Achse (134) verschwenkbar gelagert ist und an der in bezug auf den Körper äußeren Oberfläche seines gegenüberliegenden Endes wenigstens eine die genannte Elektrode darstellende Spitze (72″) trägt.

6. Vorrichtung nach Anspruch 1, dadurch gekennzeichnet, daß die mit einem Fluid gespeisten Betätigungseinrichtungen wenigstens einen verformbaren Rohrkörper (146) aufweisen, welcher in einer starren Umhüllung (148) untergebracht ist, welche ihrerseits ein Fenster (150) hat, welches die Verformung des Rohrkörpers aus der Umhüllung heraus in einer gegebenen Richtung ermöglicht.

7. Vorrichtung nach Anspruch 6, dadurch gekennzeichnet, daß sie wenigstens einen ersten verformbaren Rohrkörper (146) aufweist, welcher in einer ersten starren Umhüllung (148) angeordnet ist, welche einen Teil eines mit einem seiner Enden in bezug auf den Körper um eine zu der des Körpers lotrechte Achse (142) verschwenkbaren und an der in bezug auf den Körper äußeren Oberfläche seines gegenüberliegenden Endes wenigstens eine die genannte Elektrode darstellende Spitze (144) tragenden Arms (140) darstellt, wobei das in der ersten Umhüllung geformte Fenster (150) einer an dem Körper gebildeten ersten Stützfläche (152) gegenüberliegt, und daß wenigstens ein zweiter verformbarer Rohrkörper (164) vorgesehen ist, welcher in einer zweiten starren Umhüllung (160) angeordnet ist, welche ihrerseits an einem Ende in bezug auf den Körper um eine zu der Schwenkachse des Arms parallele Achse (162) herum verschwenkbar gelagert ist, wobei das in der zweiten Umhüllung geformte Fenster (166) einer am Körper geformten zweiten Stützfläche (168) gegenüberliegt und die zweite Umhüllung (160) mit ihrer dem zugeordneten Fenster (166) gegenüberliegenden Seite in Anlage am Arm bringbar ist, um die die Elektrode darstellende Spitze (144) von dem Rohr abgehoben zu halten.

8. Vorrichtung nach einem der vorstehenden Ansprüche, dadurch gekennzeichnet, daß die Verbindungseinrichtungen mit den Enden aneinanderstoßend in das Rohr (16) einführbare Verbindungsstangen (34) aufweisen, von denen jede einen Abschnitt (100) der Speiseleitung sowie einen Abschnitt (102) des elektrischen Leiters enthält, wobei jede Stange an ihren Enden Einrichtungen (114) für die abdichtende Verbindung der Abschnitte der Speiseleitung miteinander sowie Einrichtungen (106, 110) für die elektrische Verbindung der Abschnitte des elektrischen Leiters miteinander aufweist.

9. Vorrichtung nach Anspruch 8, dadurch gekennzeichnet, daß die Verbindungsstangen (34) derart ausgebildet sind, daß sie je nach ihrer Gesamtlänge eine gewisse Flexibilität aufweisen.

10. Vorrichtung nach einem der Ansprüche 1 bis 7, dadurch gekennzeichnet, daß die Verbindungseinrichtungen wenigstens ein flexibles Band (174, 176), welches auf eine gegebene Länge in das Rohr (16) einführbar ist, sowie gleichmäßig entlang dem Band verteilt angeordnete Zentriereinrichtungen (178) aufweisen, welche gleichzeitig die Zentrierung der Speiseleitung (182) für die mit einem Fluid gespeiste Betätigungseinrichtungen sowie des elektrischen Leiters (156) gewährleisten.

11. Vorrichtung nach einem der vorstehenden Ansprüche, dadurch gekennzeichnet, daß der Körper (60) des Schweißkopfs Einrichtungen (90) für die vorläufige Fixierung des anzuschweißenden Plättchens (50) aufweist.

1. Device for the electric welding of a metal platelet (50, 50') on the internal wall of a tube (16) of small diameter, characterized in that it comprises:
— a welding head (32, 32', 32'', 32''') whose external diameter is less than the internal diameter of said tube, said welding head comprising a body (60, 60', 60'', 60'''), at least one electrode (72, 72', 72'', 144) adapted for displacement relative to said body in a direction substantially perpendicular to the axis of said body, to exert pressure on said platelet placed on the wall of said tube, and fluid command means (82, 82', 130-132, 146) located within said body (60, 60', 60'') for displacing said electrode in said direction,
— connection means (34, 34') of variable length carrying the welding head to ensure guidance and displacement thereof in the interior of the tube, said connection means comprising at least one supply conduit (100, 182) for means for displacing the electrode and at least one electric conductor (102, 156) for supplying said electrode,
— means (36) adapted to be rendered fixed with respect to the open end of said tube to ensure micrometric displacement of said connection means and of the welding head they carry within said tube,
— means (40) for supplying pressurized fluid to said supply conduit, and
— electric supply means (38) for said electric conductor.

2. Device according to Claim 1 characterized in that the fluid command means comprise at least one pneumatic actuator (82, 82', 130-132).

3. Device according to claim 2 characterized in that the pneumatic actuator (82) comprises a piston (82b) displaceable parallel to the axis of body (60) and a piston-rod (80) unitary with the piston (82b) and connected by a connecting rod (74) to an arm (64) articulated with respect to the body around an axis (68) which is in an orthogonal direction to the axis of the body, the said arm (64) carrying a plate (70) whose external face relative to the body, comprises a point (72) forming the said electrode.

4. Device according to claim 2 characterized in that the hydraulic actuator (82') comprises a piston displaceable parallel to the axis of body (60') and a piston-rod (80') unitary with the piston and carrying a mandrel (124) which cooperates with at least one cam piece (122) unitary with a deformable arm (64'), one of whose ends is unitary with the body, and having at the opposite end, on its external face with respect to the body, at least one point (72') constituting the said electrode.

5. Device according to claim 2 characterized in that the pneumatic actuator comprises a piston (130b-132b) displaceable orthogonally to the axis of body (60″) and a piston-rod (130c-132c) unitary with the piston and whose free end cooperates with a piece (70″), one of whose ends is articulated with respect to the body about an axis (134) whose direction is orthogonal to that of the body, the opposite end of said piece having, on its external face with respect to the body, at least one point (72″) constituting the said electrode.

6. Device according to claim 1 characterized in that the fluid command means comprise at least one deformable sleeve (146) located in a rigid envelope (148) having a window (150) enabling deformation of the sleeve in a predetermined direction outwardly of the envelope.

7. Device according to claim 6 characterized in that it comprises at least one first deformable sleeve (146) located in a first rigid envelope (148) defining one part of an arm (140) one of whose ends is articulated with respect to the body about an axis (142) orthogonal to that of the body, the opposite end of said arm having, on its external face relative to the body, at least one point (144) forming the said electrode, the window (150) formed in the first envelope being located facing a first bearing surface (152) formed on said body, and at least one second deformable sleeve (164) located in a second rigid envelope (160), one of whose ends is articulated with respect to the body about an axis (162) parallel to the axis of articulation of said arm, the window (166) formed in the second envelope being located facing a second bearing surface (168) formed on the said body, and the opposite end of the second envelope (160) being adapted to cooperate with the arm by its face opposite to the corresponding window (166) to hold the point (144) constituting the electrode away from the tube.

8. Device according to any one of the preceding claims characterized in that the connection means comprise connecting rods (34), adapted for introduction end-to-end into the tube (16), each rod comprising a section (100) of the said supply conduit and a section (102) of the said electrical conductor, each rod having at its ends fluid-tight connection means (114) for the supply conduit, and electrical contacts (106, 110) for connecting the sections of the electrical conductor.

9. Device according to claim 8 characterized in that the said connecting rods (34) are formed in such a manner as to have some lengthwise flexibility.

10. Device according to any one of claims 1 to 7 characterized in that the connection means comprise at least one flexible ribbon (174, 176) adapted to be introduced into the tube (16) over a predetermined length, and centreing means (176) regularly distributed lengthwise of the said tape and simultaneously ensuring centreing of the supply conduit (182) for the fluid command means, and the electrical conductor (156).

11. Device according to any one of the preceding claims, characterized in that the said body (60) of the welding head, comprises temporary fixing means (90) for said platelet (50) to be welded.

**Claims for the contracting States: CH, DE, FR, GB, IT, LI**

1. Device for the electric welding of a metal platelet (50, 50′) on the internal wall of a tube (16) of small diameter, comprising:
— a welding head (32, 32′, 32″, 32′″) whose external diameter is less than the internal diameter of said tube, said welding head comprising a body (60, 60′, 60″, 60′″), at least one electrode (72, 72′, 72″, 144) adapted for displacement relative to said body in a direction substantially perpendicular to the axis of said body, to exert pressure on said platelet placed on the wall of said tube, and command means for displacing said electrode in said direction,
— connection means (34, 34′) of variable length carrying the welding head to ensure guidance and displacement thereof in the interior of the tube, said connection means comprising at least one supply conduit (100, 182) for means for displacing the electrode and at least one electric conductor (102, 156) for supplying said electrode,
— means (36) adapted to be rendered fixed with respect to the open end of said tube to ensure micrometric displacement of said connection means and of the welding head they carry within said tube,
— means for actuating said command means and said electric supply means (38) for said electric conductor,
characterized by the fact that the command means comprise fluid command means (82, 82′, 130-132, 146) located within said body (60, 60′, 60″), and by the fact that it has supply means (40) for pressurized fluid.

2. Device according to claim 1 characterized in that the fluid command means comprise at least one pneumatic actuator (82, 82′, 130-132).

3. Device according to claim 2 characterized in that the pneumatic actuator (82) comprises a piston (82b) displaceable parallel to the axis of body (60) and a piston-rod (80) unitary with the piston (82b) and connected by a connecting rod (74) to an arm (64) articulated with respect to the body around an axis (68) which is in an orthogonal direction to the axis of the body, the said arm (64) carrying a plate (70) whose external face relative to the body, comprises a point (72) forming the said electrode.

4. Device according to claim 2 characterized in that the hydraulic actuator (82′) comprises a piston displaceable parallel to the axis of body (60′) and a piston-rod (80′) unitary with the piston and carrying a mandrel (124) which cooperates with at least one cam piece (122) unitary with a deformable arm (64′), one of whose ends is unitary with the body, and having at the opposite end, on its external face with respect to the body, at least one point (72') constituting the said electrode.

5. Device according to claim 2 characterized in that the pneumatic actuator comprises a piston (130b-132b) displaceable orthogonally to the axis of body (60") and a piston-rod (130c-132c) unitary with the piston and whose free end cooperates with a piece (70"), one of whose ends is articulated with respect to the body about an axis (134) whose direction is orthogonal to that of the body, the opposite end of said piece having, on its external face with respect to the body, at least one point (72") constituting the said electrode.

6. Device according to claim 1 characterized in that the fluid command means comprise at least one deformable sleeve (146) located in a rigid envelope (148) having a window (150) enabling deformation of the sleeve in a predetermined direction outwardly of the envelope.

7. Device according to claim 6 characterized in that it comprises at least one first deformable sleeve (146) located in a first rigid envelope (148) defining one part of an arm (140) one of whose ends is articulated with respect to the body about an axis (142) orthogonal to that of the body, the opposite end of said arm having, on its external face relative to the body, at least one point (144) forming the said electrode, the window (150) formed in the first envelope being located facing a first bearing surface (152) formed on said body, and at least one second deformable sleeve (164) located in a second rigid envelope (160), one of whose ends is articulated with respect to the body about an axis (162) parallel to the axis of articulation of said arm, the window (166) formed in the second envelope being located facing a second bearing surface (168) formed on the said body, and the opposite end of the second envelope (160) being adapted to cooperate with the arm by its face opposite to the corresponding window (166) to hold the point (144) constituting the electrode away from the tube.

8. Device according to any one of the preceding claims characterized in that the connection means comprise connecting rods (34), adapted for introduction end-to-end into the tube (16), each rod comprising a section (100) of the said supply conduit and a section (102) of the said electrical conductor, each rod having at its ends fluid-tight connection means (114) for the supply conduit, and electrical contacts (106, 110) for connecting the sections of the electrical conductor.

9. Device according to claim 8 characterized in that the said connecting rods (34) are formed in such a manner as to have some lengthwise flexibility.

10. Device according to any one of claims 1 to 7 characterized in that the connection means comprise at least one flexible ribbon (174, 176) adapted to be introduced into the tube (16) over a predetermined length, and centreing means (176) regularly distributed lengthwise of the said tape and simultaneously ensuring centreing of the supply conduit (182) for the fluid command means, and the electrical conductor (156).

11. Device according to any one of the preceding claims, characterized in that the said body (60) of the welding head, comprises temporary fixing means (90) for said platelet (50) to be welded.

0 026 696

FIG.1

16a

16

2

4

30

32

34

8

36b

36

34

36a

8a

38

10  12

14

36c

40  18

6  20

FIG.3b

16

50    54

70        72

92    70

98

96

38

FIG.6

16a

136

130C    134

130    138

130a    130    50

132a    130b

70"

132    72"

60"    132b    132C

133

32"

16

15

FIG. 5b

FIG. 2

FIG. 5a

# FIG.3a

# FIG.4

0 026 696

# FIG.7

192  194  32'''  16  178  174  34'  178  178  174

50'  144  60'''  156  176

# FIG.8

194  192  194  140  60'''  142

144

50'  188  32'''  160  162  188  190

FIG.9a

FIG.9b

FIG.9c